# EUROPÄISCHE PATENTSCHRIFT

(11) **EP 1 150 048 B1**
(45) Veröffentlichungstag und Bekanntmachung des Hinweises auf die Patenterteilung: **12.11.2003**
(21) Anmeldenummer: 01107330.1
(22) Anmeldetag: 24.03.2001
(51) Int. Cl.: F16H 63/20

(54) **Schaltvorrichtung für ein Zahnräderwechselgetriebe**
Gear shift device for speed-changing gearing
Dispositif de commande pour boîte de vitesses à engrenages

(30) Priorität: 26.04.2000 DE 10020451
(43) Veröffentlichungstag der Anmeldung: 31.10.2001
(73) Patentinhaber: DaimlerChrysler AG, 70567 Stuttgart (DE)
(72) Erfinder: Pätzold, Reiner, 70188 Stuttgart (DE)

(56) Entgegenhaltungen:
- EP-A- 1 116 903
- DE-A- 19 610 104

## Beschreibung

Die Erfindung betrifft eine Schaltvorrichtung nach dem Oberbegriff von Patentanspruch 1.

Schaltvorrichtungen dieser Art zeichnen sich vor allem dadurch aus, dass für die Betätigung der Schaltwelle sowohl in deren Drehwinkelstellungen zum Anwählen des neuen Ganges als auch in deren axiale Endstellungen zum Einlegen (Schalten) des neuen Ganges lediglich die Ausübung einer äusseren axialen Stellkraft auf die Schaltwelle und für eine selbsttätige Arbeitsweise der Schaltvorrichtung mithin nur ein einziger Servomotor (Linearmotor) erforderlich ist.

Bei einer bekannten Schaltvorrichtung der eingangs genannten Art (DE 196 10 104 C2) sind darüber hinaus bereits die Wählund Schaltbewegungen der Schaltwelle klein gehalten und somit kurze Schaltzeiten dadurch erzielt, dass für das Hilfsgetriebe eine Kulisse mit einem korrespondierenden Kulissenstein vorgesehen ist. Die Kulisse weist zwei sowohl in den Richtungen der Drehachse der Schaltwelle als auch um den zwischen zwei benachbarten signifikanten Drehwinkelstellungen der Schaltwelle eingeschlossenen Differenzdrehwinkel gegeneinander versetzt liegende Kulissenabschnitte mit zur Drehachse parallelem Verlauf auf. Von den zueinander entgegengesetzt liegenden Kulissenenden der Kulissenabschnitte ist wenigstens das eine Kulissenende einer Gangstellung der Schaltwelle zugeordnet. Weiterhin weist die Kulisse einen mittleren Kulissenabschnitt mit einem zur Drehachse der Schaltwelle geneigten Verlauf auf, welcher der Neutralstellung der Schaltwelle zugeordnet ist. Bei dieser bekannten Schaltvorrichtung sind Mehrfach-Schaltungen, also Schaltungen zwischen zwei nicht benachbarten Gängen, möglich. Liegen alter und neuer Gang einer solchen Mehrfach-Schaltung in zwei nicht benachbarten signifikanten Drehwinkelstellungen der Schaltwelle, dann kann bei der bekannten Schaltvorrichtung ein Verfahren zur Durchführung einer solchen lange Wähl- und Schaltwege erfordernden Mehrfach-Schaltung angewendet werden, gemäss welchem die Schaltwelle die Neutralstellung abwechselnd in beiden Axialrichtungen durchläuft sowie die Bremse beim Durchlaufen in der einen Axialrichtung im eingerückten Zustand und beim Durchlaufen in der anderen Axialrichtung im ausgerückten Zustand gehalten wird, wobei die Schaltwelle nach Erreichen einer nicht die neue anzuwählende Gangstellung enthaltenden signifikanten Drehwinkelstellung und nach Verlassen der Neutralstellung noch vor Erreichen einer Gangstellung in ihrer axialen Bewegung in die jeweils andere Axialrichtung umgesteuert wird.

Die der vorliegenden Erfindung zugrunde liegende Aufgabe ist im wesentlichen darin zu sehen, bei einer Schaltvorrichtung der eingangs genannten Art Schaltwege und -zeiten insbesondere auch bei Mehrfach-Schaltungen weiter zu verkürzen.

Diese Aufgabe wird erfindungsgemäß durch die Merkmale von Patentanspruch 1 gelöst.

Bei der Schaltvorrichtung nach der Erfindung ist es durch wenigstens eine zusätzliche zwangsgeführte Wählhülse in entsprechender gegenseitiger Abstimmung mit der Zwangsführung der ersten Wählhülse ermöglicht, Hoch- und Rückschaltungen unter Überspringen von einem oder mehreren Gängen direkt, d.h., ohne mehrmaliges Umsteuern der Schaltwelle, durchführen zu können.

Infolge der axialen Schaltkraft können in besonders vorteilhafter Weise kostengünstige Linearmotoren, wie beispielsweise Hydraulikkolben oder Elektromagneten Anwendung finden.

Bei der vorteilhaften Ausgestaltungsalternative der Schaltvorrichtung nach Patentanspruch 2 ist durch wenigstens eine zusätzliche Wählhülse und das jeweils zugeordnete zusätzliche Hilfsgetriebe mit entsprechender gegenseitiger Abstimmung der Getriebeübersetzungen des der ersten Wählhülse zugeordneten Hilfsgetriebes und des jeweils der zusätzlichen Wählhülse zugeordneten Hilfsgetriebes in Höhe und Wirkungssinn ermöglicht, Hoch- und Rückschaltungen unter Überspringen von einem oder mehreren Gängen direkt, d.h., ohne mehrmaliges Umsteuern der Schaltwelle, durchführen zu können.

Bei einer vorteilhaften Ausführungsform der Schaltvorrichtung nach der Erfindung gemäss Patentanspruch 3 ist durch die gleichgrossen, jedoch gegenläufigen Übersetzungsverhältnissse der Hilfsgetriebe u.a. erreicht, dass bei einer Betätigung der Schaltwelle zum Ausrücken eines mittleres Ganges und Wechsel in eine benachbarte signifikante Drehwinkelstellung bei einer Hochschaltung lediglich die erste Wählhülse oder bei einer Rückschaltung lediglich die zusätzliche Wählhülse zu aktivieren ist.

Bei einer insbesondere für Vielgang-Getriebe vorteilhaften Ausgestaltung der Schaltvorrichtung nach der Erfindung gemäss Patentanspruch 4 ist erreicht, dass durch Aktivieren einer zusätzlichen Wählhülse direkte Rück-Schaltungen unter Überspringen auch von einer Mehrzahl von Gängen durchzuführen sind.

Hiervon ausgehend hat Patentanspruch 5 eine bspw. auch für ein 5- oder 6-Gang-Getriebe vorteilhafte Ausführungsform der Schaltvorrichtung nach der Erfindung zum Gegenstand, bei der das Überspringen von zwei oder drei Gängen bei direkten Rückschaltungen durch Aktivierung einer zusätzlichen Wählhülse ermöglicht ist.

Gegenstand von Patentanspruch 6 ist eine wiederum insbesondere für Vielgang-Getriebe vorteilhafte Ausführungsform der Schaltvorrichtung nach der Erfindung mit der Möglichkeit, durch Aktivieren einer zusätzlichen Wählhülse direkte Schaltungen unter Überspringen von zwei oder drei oder mehr Gängen durchzuführen, wobei dies in diesem Falle für die Hochschaltungen erreicht ist.

Besonders vorteilhaft kann die Erfindung in einem 5- oder 6-Gang-Getriebe Anwendung finden, bei dem das Überspringen von zwei oder drei Gängen bei direkten Hochschaltungen durch Aktivieren einer zusätzlichen Wählhülse ermöglicht ist.

Während die bisherigen Ausführungsformen der Schaltvorichtuung nach der Erfindung die Verwendung von wenigstens zwei Wählhülsen mit zugeordneten Hilfsgetrieben und Bremsen vorsehen, wird die Anzahl der Schaltmöglichkeiten mit Überspringen von Gängen bei einer weiteren vorteilhaften Ausführungsform der Schaltvorrichtung nach der Erfindung durch die Verwendung von wenigstens drei Wählhülsen erhöht. Bei dieser Ausführungsform sind stets zwei Wählhülsen vorgesehen, deren Hilfsgetriebe jeweils den minimalen, lediglich zwei benachbarte signifikante Drehwinkelstellungen einschliessenden Differenzdrehwinkel festlegen, wobei in Bezug auf den jeweiligen Wirkungssinn das eine Hilfsgetriebe mit Hochschalt-Charakteristik und das andere mit Rückschalt-Charakteristik ausgelegt ist. Bei dieser Ausführungsform ist eine dritte Wählhülse verwendet, deren Hilfsgetriebe - mit Hochschaltoder Rückschalt-Charakteristik ausgelegt - einen grösseren Differenzdrehwinkel bestimmt, der mindestens doppelt so gross ist als der minimale Differenzdrehwinkel.

Auch bei einer weiteren vorteilhaften Ausführungsform der Schaltvorrichtung nach der Erfindung wird die Anzahl der Schaltmöglichkeiten mit Überspringen von Gängen durch die Verwendung von wenigstens drei Wählhülsen erhöht. Bei dieser Ausführungsform ist nur eine Wählhülse vorgesehen, durch deren mit Hochschalt- Charakteristik ausgelegtes Hilfsgetriebe lediglich der minimale Differenzdrehwinkel festgelegt ist. Der jeweilige Differenzdrehwinkel der beiden anderen Hilfsgetriebe ist mindestens doppelt so gross, wobei das eine Hilfsgetriebe mit Hochschalt-Charakteristik und das andere mit Rückschalt-Charakteristik ausgelegt ist.

Schliesslich ist es bei einer weiteren Ausführungsform der Schaltvorrichtung nach der Erfindung als vorteilhaft anzusehen, dass die Anzahl der Schaltmöglichkeiten mit Überspringen von Gängen nochmals durch die Verwendung von wenigstens vier Wählhülsen mit zugeordneten Hilfsgetrieben und Bremsen erhöht sein kann. Bei dieser Ausführungsform sind stets zwei jeweils einer Wählhülse zugeordnete Hilfsgetriebe vorgesehen, welche lediglich den minimalen Differenzdrehwinkel festlegen - und von denen das eine Hilfsgetriebe Hochschaltund das andere Rückschalt-Charakteristik aufweist. Desweiteren sind bei dieser Ausführungsform auch noch stets zwei jeweils einer Wählhülse zugeordnete Hilfsgetriebe verwendet, welche gleiche oder ungleiche grössere Differenzdrehwinkel festlegen - und von denen das eine Hilfsgetriebe Hochschalt-Charakter und das andere Rückschalt-Charakter aufweist.

Weitere Vorteile der Erfindung gehen aus den weiteren Merkmalen der Unteransprüche, der Beschreibung und der Zeichnung hervor.

Die Erfindung ist nachstehend anhand von drei in der Zeichnung schematisch dargestellten Ausführungsformen näher beschrieben. In der Zeichnung bedeuten
- Figur 1: eine perspektivische Darstellung einer Schaltvorrichtung nach der Erfindung in der ersten Ausführungsform,
- Figur 1a: ein Positionsschema für die Stellungen der Schaltwelle der Schaltvorrichtung von Figur 1,
- Figur 2: die Schaltvorrichtung von Figur 1 in Ansicht, gesehen in Richtung der Drehachse der Schaltwelle,
- Figur 3: eine zeichnerische Erläuterung des Zusammenwirkens von Schaltwelle und der einen Wählhülse anhand der Kulisse bei der Schaltvorrichtung von Figur 1 während eines Gangwechsels,
- Figur 4: eine zeichnerische Abfolge von Schaltphasen bei der Schaltvorrichtung von Figur 1, bei einem Gangwechsel, bei welchem die Bremsen beider Hilfsgetriebe ausgerückt sind,
- Figur 5: eine zeichnerische Erläuterung des Zusammenwirkens von Schaltwelle und beider wählhülsen anhand der zugeordneten Kulissen bei der Schaltvorrichtung von Figur 1 während eines Gangwechsels,
- Figur 6: eine tabellarische Gegenüberstellung der Schalt-Charakteristiken der ersten Ausführungsform und zwei weiterer Ausführungsformen der Schaltvorrichtung nach der Erfindung.

In einem bei 11 lediglich angedeuteten Gehäuse eines nicht näher dargestellten Zahnräderwechselgetriebes ist eine mit ihrer Drehachse 24-24 parallel zu den Getriebewellen ausgerichtete Schaltwelle 12 drehbar und axial verschiebbar gelagert. Zum Ankuppeln der Losräder der die Gangübersetzungen liefernden Zahnradstufen an ihre Getriebewelle sitzen auf den Getriebewellen Zahnradkupplungen, welche entweder einzeln oder paar- und wahlweise durch Schaltgabeln 8,9 und 10 betätigt werden, die wiederum jeweils mit einer zugehörigen Schaltstange 31-8, 31-9 und 31-10 bewegungsfest verbunden sind. Diese Schaltstangen sind sowohl gegenüber dem Gehäuse 11 in je einer zur Drehachse 24-24 parallelen Bewwegungsbahn axial verschiebbar gelagert als auch mit je einer Schaltnut 32 für den Eingriff eines zur Schaltwelle 12 radial und bewegungsfest angeordneten Schaltfingers 13 versehen. Dabei ist die Anordnung so getroffen, dass in demjenigen Getriebezustand, in welchem alle Zahnradkupplungen ausgerückt sind, der Schaltfinger 13 und alle Schaltnuten 32 in einer Neutralstellung stehen, also mittig zu einer Gehäuseebene liegen, welche auf der Drehachse 24-24 senkrecht steht.

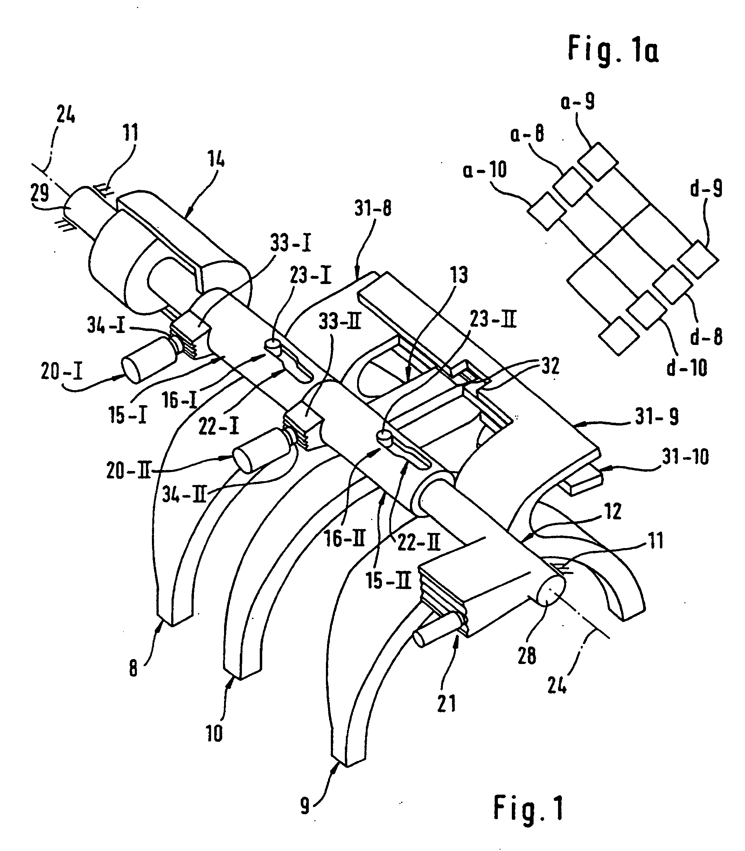

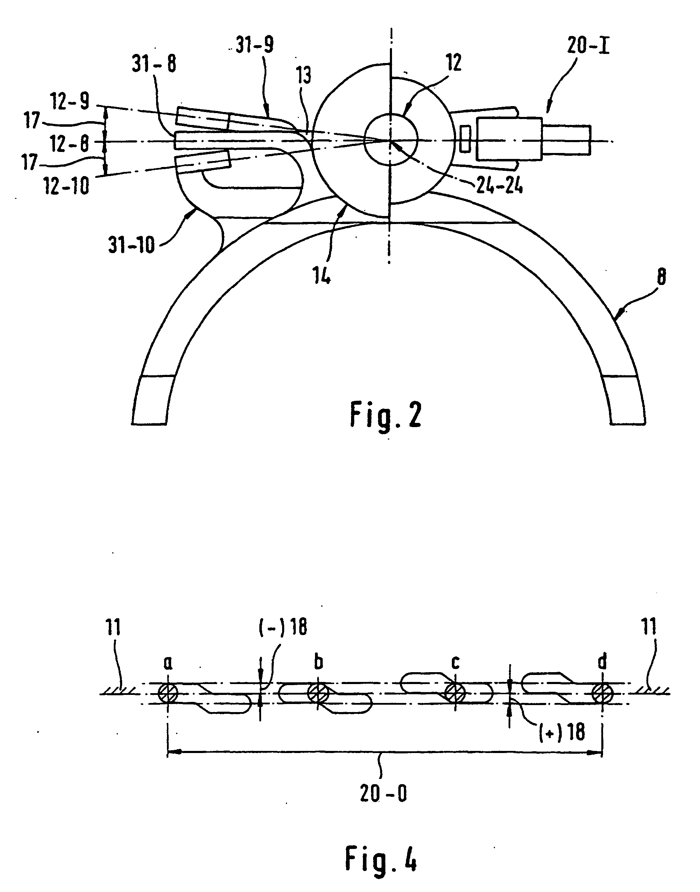

Die Schaltstangen 31-8, 31-9 und 31-10 sind mit ihrer jeweiligen Schaltnut 32 in je einer zugehörigen Drehwinkelstellung um die Drehachse 24-24 der Schaltwelle 12 gegenüber dem Gehäuse 11 fixiert. Die Schaltwelle 12 muss demnach in eine signifikante Drehwinkelstellung 12-8 betätigt werden, wenn der Schaltfinger 13 gemäss den Figuren 1 und 2 mit der Schaltnut 32 der Schaltstange 31-8 in Eingriff stehen soll. Die Schaltwelle 12 muss in eine signifikante Drehwinkelstellung 12-9 betätigt werden, wenn der Schaltfinger 13 mit der Schaltnut 32 der Schaltstange 31-9 in Eingriff gebrachr werden soll. Und die Schaltwelle 12 muss in eine signifikante Drehwinkelstellung 12-10 betätigt werden, wenn der Schaltfinger 13 mit der Schaltnut 32 der Schaltstange 31-10 in Eingriff stehen soll.

Wie sich auch aus der Darstellung der Figur 1a ohne weiteres ergibt, kann jede der Schaltstangen 31-8, 31-9 und 31-10 - ausgehend von der Neutralstellung - in der vom Schaltfinger 13 auf das eine Wellenende 29 der Schaltwelle 12 weisenden Axialrichtung in eine Gangstellung a-8, a-9 und a-10 oder in der entgegengesetzten Axialrichtung in eine Gangstellung d-8, d-9 und d-10 betätigt werden.

Zur Betätigung der Schaltwelle 12 in ihre den beiden jeweils einer Schaltstange zugehörigen Gangstellungen entsprechenden beiden Endstellungen a und d ist die Schaltwelle 12 an ihrem Wellenende 29 mit einem Schaltstellglied 14 der Axialkolben-Bauart gekoppelt.

Zur zusätzlichen Betätigung der Schaltwelle 12 in ihre signifikanten Drehwinkelstellungen 12-8, 12-9 und 12-10 durch das Schaltstellglied 14 sind eine erste Wählhülse 15-I und eine zweite Wählhülse 15-II verwendet, welche unter Vermittlung je eines zugeordneten ersten Hilfsgetriebes 16-I bzw. zweiten Hilfsgetriebes 16-II zur Umwandlung einer hinund hergehenden Bewegung in eine Drehbewegung mit der Schaltwelle 12 verbunden sind, wobei die Getriebereaktion in den Hilfsgetrieben jeweils durch eine zugehörige erste einund ausrückbare Bremse 20-I und eine zugehörige zweite einund ausrückbare Bremse 20-II hergestellt wird.

Während der Schaltfinger 13 an einem mittleren Abschnitt der Schaltwelle 12 angeordnet ist, ist das andere Ende 28 der Schaltwelle 12 mit einer Rasteneinrichtung 21 verbunden, durch welche die Schaltwelle 12 in ihren signifikanten Drehwinkelstellungen 12-8, 12-9 und 12-10 gegenüber dem Gehäuse 11 unter Aufrechterhaltung ihrer Axialbeweglichkeit verrastet ist.

Die beiden Wählhülsen 15-I und 15-II sind in nicht mehr dargestellter Weise gegenüber dem Gehäuse 11 drehbar und axial unverschiebbar angeordnet.

Die beiden Wählhülsen 15-I und 15-II sind auf dem zwischen Schaltstellglied 14 und Rasteneinrichtung 21 liegenden Abschnitt der Schaltwelle 12 konzentrisch sowie relativ zur Schaltwelle 12 sowohl dreh- als auch axialbeweglich angeordnet.

Die Bremsen 20-I,20-II sind formschlüssig und jeweils an dem dem Schaltstellglied 14 zugekehrten Hülsenende angeordnet, an welchem die Wählhülsen 15-I,15-II ein zu ihr bewegungsfestes Bremssegment 33-I bzw. 33-II aufweisen, das mit je einer axialen Bremseingriffsnut für die Drehwinkelstellungen gegenüber dem Gehäuse 11 versehen ist, wobei in die Bremseingriffsnuten ein Bremseingriffsglied 34-I bzw.34-II formschlüssig eingreifen kann, welches motorisch betätigbar und radialbeweglich zur Drehachse 24-24 angeordnet ist.

Die Hilfsgetriebe 16-I,16-II sind jeweils in Form einer zur zugeordneten Wählhülse 15-I bzw. 15-II bewegungsfest angeordneten Kulisse 22-I bzw. 22-II und eines in letzterer gleitbeweglich geführten, zur Schaltwelle 12 radial und bewegungsfest angeordneten Kulissensteines oder -stiftes 23-I bzw. 23-II ausgebildet.

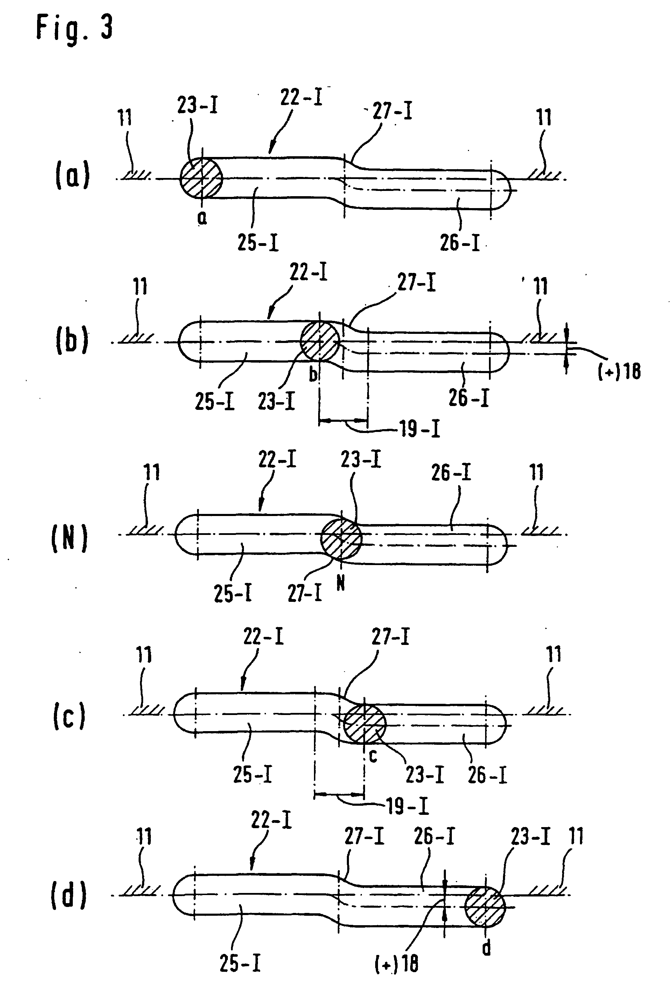

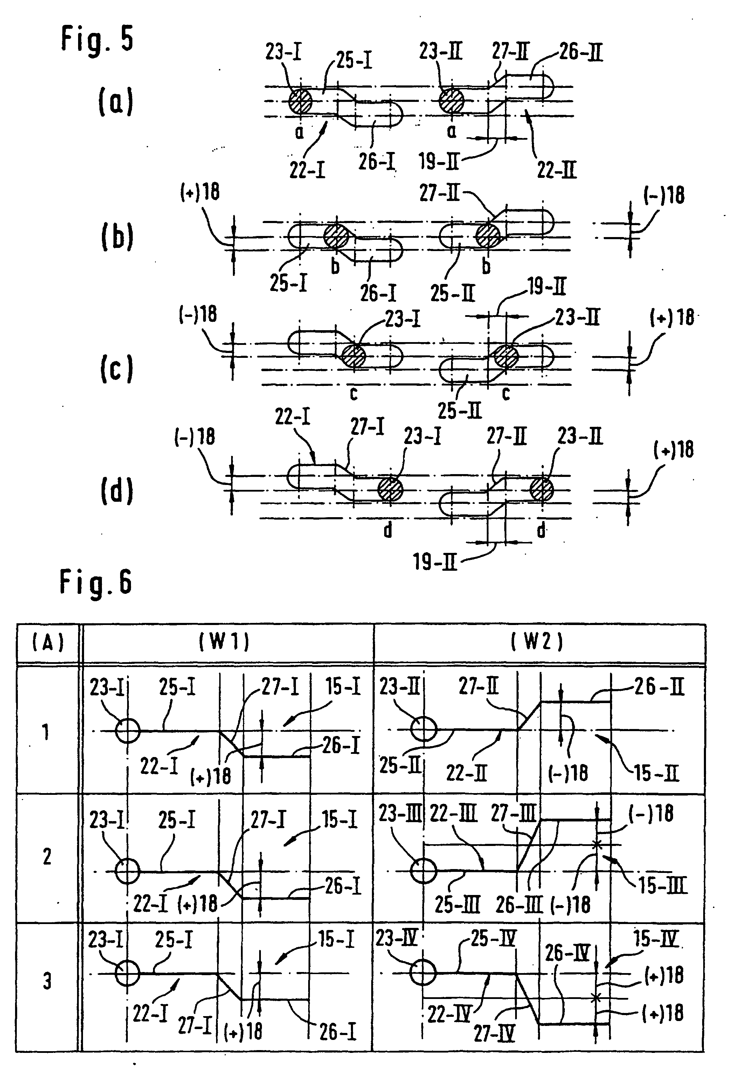

Die Kulissen 22-I,22-II weisen jeweils zwei Kulissenabschnitte 25-I und 26-I bzw. 25-II und 26-II auf, welche parallel zur Drehachse 24-24 der Schaltwelle 12 verlaufen und in Umfangsrichtung gegeneinander versetzt sind, und zwar bei der Kulisse 22-I um einen als positiv definierten Versatz (+)18 (Fig.3(b)) und bei der Kulisse 22-II um einen gleich grossen, jedoch entgegengesetzt gerichteten Versatz (-)18 (Fig.5(b)). Der jeweilige Versatz 18 entspricht dem Betrage nach dem minimalen Differenzdrehwinkel 17 (Fig.2), um welchen die benachbarten signifikanten Drehwinkelstellungen 12-8 und 12-9 sowie 12-8 und 12-10 der Schaltwelle 12 jeweils gegeneinander versetzt liegen.

Den zueinander entgegengesetzt liegenden Kulissenenden der Kulissenabschnitte 25-I und 26-I bzw.25-II und 26-II ist jeweils eine Endstellung a bzw. d der Schaltwelle 12 zugeordnet, welche den Gangstellungen der Schaltstangen 31-8,31-9 und 31-10 entsprechen.

An ihren einander zugekehrten Kulissenenden sind die Kulissenabschnitte 25-I,26-I bzw. 25-II,26-II durch einen mittleren Kulissenabschnitt 27-I bzw. 27-II mit zur Drehachse 24-24 der Schaltwelle 12 geneigtem und durch den Versatz (+)18 bzw. (-)18 bestimmten Verlauf miteinander verbunden. Der mittlere Abschnitt 27-I bzw. 27-II der Kulisse 22-I bzw. 22-II ist der Neutralstellung N (Fig.3(N)) des jeweiligen Kulissenstiftes 23-I bzw. 23-II und somit der Neutralstellung der Schaltwelle 12 zugeordnet.

Die einander zugekehrten Kulissenenden der Kulissenabschnitte 25-I,26-I bzw. 25-II,26-II schliessen den Bereich 19-I (Fign.3(b)u.(c)) bzw. 19-II (Fign.5(a),(c)u. (d)) der Neutralstellung zwischen sich ein, welcher für die Steuerung der Schaltwelle 12 durch die Bremsen 20-I,20-II von wesentlicher Bedeutung ist. Die Stellung des jewweiligen Kulissenstiftes 23-I bzw. 23-II am Übergang zwischen den Kulissenabschnitten 25-I u. 27-I bzw. 25-II u.27-II ist mit b angegeben (Fig.3(b) bzw. 5(b)). Die Stellung des jeweiligen Kulissenstiftes 23-I bzw. 23-II am Übergang zwischen den Kulissenabschnitten 26-I u. 27-I bzw . 26-II u. 27-II ist mit c angegeben (Fign.3(c) bzw. 5(c)).

Die Arbeitsweise der Schaltvorrichtung nach der Erfindung in der ersten Ausführungsform der Figuren 1 bis 5 ergibt sich wie folgt :
In den Figuren 1 und 2 ist die Schaltvorrichtung in einem Zustand gezeichnet, bei welchem die Schaltstange 31-8 in der Gangstellung a-8 und die Schaltwelle 12 in der entsprechenden Endstellung a (Stellung a der Kulissenstifte 23-I u. 23-II) sowie in der Signifikanten. Drehwinkelstellung 12-8 für den Eingriff des Schaltfingers 13 in die Schaltnut 32 der Schaltstange 31-8 stehen.

Bei einem Gangwechsel aus der Gangstellung a-8 der Schaltstange 31-8 in die ausgewählte gassengleiche Gangstellung d-8 der Schaltstange 31-8, also bei einer Einfach-Schaltung ohne Überspringen einer Gangstellung, werden die Bremsen 20-I,20-II im jeweiligen ausgerückten Zustand 20-0 und die Schaltwelle 12 durch die Rasteneinrichtung 21 in der signifikanten Drehwinkelstellung 12-8 gehalten. Die Schaltwelle 12 wird durch das Schaltstellglied 14 in die der Gangstellung d-8 entsprechende Endstellung d betätigt, wobei die reaktionslose erste Wählhülse 15-I durch den Kulissenstift 23-I beim Durchlaufen des Bereiches 19-I der Neutralstellung N um den Versatz (-)18 in dem von der Schaltstange 31-8 auf die Schaltstange 31-10 weisenden einen Drehsinn (Fig.4) - dagegen die reaktionslose zweite Wählhülse 15-II durch den Kulissenstift 23-II beim Durchlaufen des Bereiches 19-II der Neutralstellung N um den Versatz (+)18 in dem von der Schaltstange 31-8 auf die Schaltstange 31-9 weisenden anderen Drehsinn jeweils gegenüber der Schaltwelle 12 verdreht werden.

Bei einem Gangwechsel aus der Gangstellung a-8 der Schaltstange 31-8 in die Gangstellung d-9 der benachbarten Schaltstange 31-9, also bei einer Dreifach-Schaltung mit Überspringen der beiden Gangstellungen d-8 und a-9, wird gemäss Fig.3 die erste Wählhülse 15-I durch die zugehörige erste Bremse 20-I festgebremst, während die zweite Wählhülse 15-II durch den ausgerückten Zustand der zugehörigen zweiten Bremse 20-II reaktionslos gehalten ist. Die Schaltwelle 12 wird durch das Schaltstellglied 14 in seine der Gangstellung d-9 entsprechende Endstellung d betätigt, wobei der Schaltwelle 12 beim Durchlaufen des Bereiches 19-I der Neutralstellung durch den Kulissenabschnittes 27-I entsprechend dem Versatz (+)18 in Figur 3(d) eine Drehbewegung über ihren Kulissenstift 23-I um den Differenzdrehwinkel 17 aufgezwungen wird, deren Drehsinn somit von der Schaltstange 31-8 auf die Schaltstange 31-9 gerichtet ist, so dass die Schaltwelle 12 in ihre signifikante Drehwinkelstellung 12-9 für den Eingriff ihres Schaltfingers 13 in die Schaltnut 32 der Schaltstange 31-9 gelangt und letztere in die Gangstellung d-9 betätigt. Hierbei wurde die reaktionslose zweite Wählhülse 15-II durch den zugehörigen Kulissenstift 23-II der Schaltwelle 12 um den Versatz (+)18 gegenüber der Schaltwelle 12 in demselben Drehsinn verdreht.

Bei einem Gangwechsel aus der Gangstellung a-8 der Schaltstange 31-8 in die Gangstellung a-9 der Schaltstange 31-9, also bei einer Zweifach-Schaltung mit Überspringen der Gangstellung d-8, wird die Schaltwelle 12 zunächst bei eingerückter erster Bremse 20-I und ausgrückter zweiter Bremse 20-II über den mittleren Kulissenabschnitt 27-I der festgebremsten ersten Wählhülse 15-I in die der Gangstellung a-9 zugehörige signifikante Drehwinkelstellung 12-9 durch das Schaltstellglied 14 betätigt, wobei in abgekürzter Schaltweise die Bremse 20-I - noch vor Erreichen der der anderen Gangstellung d-9 entsprechenden Endstellung d durch die Schaltwelle 12 - ebenfalls ausgerückt und vorzugsweise gleichzeitig das Schaltstellglied 14 umgesteuert wird, so dass die Schaltwelle 12 noch vor Erreichen der Endstellung d in ihre der Gangstellung a-9 entsprechende Endstellung a betätigt wird. In dieser Endstellung a nimmt die Kulisse 22-II der zweiten Wählhülse 15-II ihre in Figur 5(a) gezeichnete Stellung relativ zum zugehörigen Kulissenstift 23-II ein.

Bei einem Gangwechsel aus der Gangstellung a-8 der Schaltstange 31-8 in die Gangstellung d-10 der Schaltstange 31-10, also bei einer Einfach-Schaltung ohne Überspringen einer Gangstellung, wird die Schaltwelle 12 bei eingerückter zweiter Bremse 20-II und ausgerückter erster Bremse 20-I durch das Schaltstellglied 14 in ihre der Gangstellung d-9 entsprechende andere Endstellung d betätigt. Hierbei zwingt der mittlere Kulissenabschnitt 27-II der festgebremsten zweiten Wählhülse 15-II beim Durchlaufen durch den zugehörigen Kulissenstift 23-II der Schaltwelle 12 eine Drehbewegung entsprechend dem Versatz (-)18 der Figur 5(b) in die signifikante Drehwinkelstellung 12-10 für den Eingriff des Schaltfingers 13 in die Schaltnut 32 der Schaltstange 31-10 auf. In der Gangstellung d-10 nimmt die Kulisse 22-I der ersten Wählhülse 15-I ihre in Figur 5(d) gezeichnete Stellung relativ zum zugehörigen Kulissenstift 23-I ein.

Bei einem Gangwechsel aus der Gangstellung d-9 der Schaltstange 31-9 in die Gangstellung a-8 der Schaltstange 31-8, also bei einer Dreifach-Schaltung mit Überspringen der beiden Gangstellungen a-9 und d-8, wird die Schaltwelle 12 bei eingerückter erster Bremse 20-I und ausgerückter zweiter Bremse 20-II durch das Schaltstellglied 14 in ihre der Gangstellung a-8 entsprechende Endstellung a betätigt. Dabei wird der Schaltwelle 12 beim Durchlaufen des mittleren Kulissenabschnittes 27-I der festgebremsten ersten Wählhülse 15-I durch den zugehörigen Kulissenstift 23-I eine Drehbewegung entsprechend dem Versatz (-)18 in der Figur 5(d) aufgezwungen, so dass die Schaltwelle 12 in ihre signifikante Drehwinkelstellung 12-8 für den Eingriff des Schaltfingers 13 in die Schaltnut 32 der Schaltstange 31-8 gelangt. In der Endstellung d nimmt die zweite Wählhülse 15-II mit ihrer Kulisse 22-II die in Figur 5(a) gezeichnete Stellung gegenüber der Schaltwelle 12 bzw. dem zugehörigen Kulissenstift 23-II ein.

Bei einem Gangwechsel aus der Gangstellung d-8 der .Schaltstange 31-8 in die Gangstellung a-10 der Schaltstange 31-10, also bei einer Dreifach-Schaltung mit Überspringen der beiden Gangstellungen a-8 und d-10, wird das gleiche Steuerungsprinzip wie bei dem vorstehend beschriebenen Gangwechsel zwischen den Gangstellungen d-9 und a-8 angewendet.

Bei einem Gangwechsel aus der Gangstellung d-9 der Schaltstange 31-9 in die Gangstellung d-10 der Schaltstange 31-10, also bei einer Vierfach-Schaltung mit Überspringen der drei Gangstellungen a-9, d-8, a-8, wird in einer ersten Schaltphase die bereits oben beschriebene Dreifach-Schaltung in die Gangstellung a-8 bei eingerückter erster Bremse 20-I und ausgerückter zweiter Bremse 20-II durchgeführt, an die sich eine zweite Schaltphase mit der ebenfalls bereits oben beschriebenen Einfach-Schaltung in die Gangstellung d-10 anschliesst.

Bei einem Gangwechsel aus der Gangstellung a-9 der Schaltstange 31-9 in die Gangstellung a-10 der Schaltstange 31-10, also bei einer Vierfach-Schaltung mit Überspringen der drei Gangstellungen d-9,a-8,d-8, wird in einer ersten Schaltphase eine Einfach-Schaltung in die Gangstellung d-8 der Schaltstange 31-8 durchgeführt, bei welcher die erste Bremse 20-I ausgerückt und die zweite Bremse 20-II eingerückt ist. Die Schaltwelle 12 wird hierbei durch das Schaltstellglied 14 in ihre der Gangstellung d-8 entsprechende Endstellung d betätigt, so dass dem Kulissenstift 23-II und damit der Schaltwelle 12 beim Durchlaufen des mittleren Kulissenabschnittes 27-II der festgebremsten zweiten Wählhülse 15-II entsprechend dem Versatz (+)18 in Figur 5(d) eine Drehbewegung aufgezwungen wird. Die Schaltwelle 12 gelangt dadurch in ihre signifikante Drehwinkelstellung 12-8 für den Eingriff des Schaltfingers 13 in die Schaltnut 32 der Schaltstange 31-8. Der Gangwechsel wird durch eine sich anschliessende zweite Schaltphase abgeschlossen, in welcher die bereits oben beschriebene Dreifach-Schaltung in die Gangstellung a-10 mit Überspringen der beiden Gangstellungen a-8 und d-10 durchgeführt wird.

In der tabellarischen Gegenüberstellung der Figur 6 sind in Spalte (A) die Ordnungszahlen 1,2u.3 für entsprechende Ausführungsformen der Schaltvorrichtung nach der Erfindung aufgeführt, während in den Spalten (W1) und (W2) die beiden in den drei Ausführungsformen jeweils verwendeten Wählhülsen anhand ihrer jeweiligen Kulissenform lediglich symbolhaft dargestellt sind.

Die Ausführungsform in Zeile 1 der Figur 6 ist mit der vorstehend anhand der Figuren 1 bis 5 beschriebenen ersten Ausführungsform der Schaltvorrichtung nach der Erfindung identisch, wobei in Spalte (W1) die Wählhülse 15-I mit der Kulisse 22-I und dem Kulissenstift 23-I und den entsprechenden Kulissenabschnitten mit ihrem gegenseitigen Versatz schematisch dargestellt und mit den in der Beschreibung verwendeten Bezugszahlen bzw. -angaben versehen sind - wie dies auch für die in Spalte (W2) schematisch dargestellte Wählhülse 15-II mit Kulisse 22-II und Kulissenstift 23-II der ersten Ausführungsform gilt.

Bei den beiden Ausführungsformen der Zeilen 2 und 3 ist jeweils die gemäss Spalte (W1) verwendete eine Wählhülse mit der Wählhülse 15-I der ersten Ausführungsform der Zeile 1 identisch, so dass für übereinstimmende Merkmale die gleichen Bezugszahlen bzw. - angaben in Spalte (W1) verwendet sind.

Bei den beiden Ausführungsformen der Zeilen 2 und 3 ist jeweils lediglich eine andere zweite Wählhülse 15-III bzw. 15-IV gemäss Spalte (W2) verwendet, im übrigen sind alle drei Ausführungsformen identisch, so dass bezüglich weitergehender Einzelheiten der Ausführungsformen der Zeilen 2 und 3 auf die Beschreibung und Zeichnung der Ausführungsform der Zeile 1 verwiesen werden kann.

Bei der zweiten Ausführungsform der Schaltvorrichtung nach der Erfindung entsprechend Zeile 2 in Figur 6 wird eine zweite Wählhülse 15-III gemäss Spalte (W2) mit einer Kulisse 22-III und einem Kulissenstift 23-III verwendet, welche sich von der Wählhülse 15-II nach Spalte (W2) der ersten Ausführungsform der Zeile 1 nur dadurch unterscheidet, dass bei ersterer der Versatz [(-)18] + [(-)18] zwischen den Kulissenabschnitten 25-III und 26-III doppelt so gross ist wie der Versatz [(-)18] zwischen den entsprechenden Kulissenabschnitten 25-II und 26-II bei der Wählhülse 15-II der ersten Ausführungsform.

Einer der Vorteile der zweiten Ausführungsform soll bspw. nachstehend anhand eines Gangwechsels aus der Gangstellung a-9 der Schaltstange 31-9 in die Gangstellung d-10 der Schaltstange 31-10, also für eine Fünffach-Schaltung mit Überspringen der vier Gangstellungen d-9,a-8,d-8,a-10, beschrieben werden. Bei dieser Schaltung ist die Wählhülse 15-III durch ihre zugehörige, jedoch nicht mehr dargestellte Bremse 20-III festgebremst - dagegen die Wählhülse 15-II reaktionslos. Durch das Betätigen der Schaltwelle 12 aus ihrer Endstellung a durch das Schaltstellglied 14 in die andere Endstellung d wird beim Durchlaufen des mittleren Kulissenabschnittes 27-III durch den Kulissenstift 23-III der Schaltwelle 12 eine Drehbewegung aus ihrer signifikanten Drehwinkelstellung 12-9 mit bisherigem Eingriff in die Schaltstange 31-9 entsprechend dem Versatz [(-)18] + [(-)18] der Kulissenabschnitte 25-III und 26-III in die signifikante Drehwinkelstellung 12-10 für den Eingriff des Schaltfingers 13 in die Schaltnut 32 der Schaltstange 31-10 aufgezwungen, so dass die Schaltwelle 12 schliesslich die Schaltstange 31-10 in ihre Gangstellung d-10 betätigt.

Die dritte Ausführungsform nach Zeile 3 der Figur 6 unterscheidet sich von der vorstehend beschriebenen zweiten Ausführungsform nach Zeile 2 der Figur 6 lediglich dadurch, dass bei ersterer der Versatz [(+)18]+[(+)18] zwischen den Kulissenabschnitten 25-IV und 26-IV der zweiten Wählhülse 15-IV gemäss Spalte (W2) positiven Wirkungssinn statt des negativen Wirkungssinnes [(-)18]+[(-)18] bei der zweiten Wählhülse 15-III der zweiten Ausführungsform nach Zeile 2 aufweist.

Einer der Vorteile der dritten Ausführungsform soll nachstehend bspw. anhand eines Gangwechsels aus der Gangstellung d-9 der Schaltstange 31-9 in die Gangstellung a-10 der Schaltstange 31-10, also für eine Fünffach-Schaltung mit Überspringen der vier Gangstellungen a-9,d-8,a-8, d-10, beschrieben werden. Bei dieser Schaltung wird die zweite Wählhülse 15-IV durch die zugehörige, jedoch nicht mehr gezeichnete Bremse 20-IV festgebremst, während die erste. Wählhülse 15-I reaktionslos bleibt. Durch die Betätigung der Schaltwelle 12 aus ihrer Endstellung d in ihre Endstellung a durch das Schaltstellglied 14 wird beim Durchlaufen des mittleren Kulissenabschnittes 27-IV durch den Kulissenstift 23-IV der Schaltwelle 12 eine Drehbewegung aus ihrer bisherigen signifikanten Drehwinkelstellung 12-9 mit Eingriff in die Schaltstange 31-9 entsprechend dem Versatz [(+)18]+[(+)18] in die signifikante Drehwinkelstellung 12-10 für den Eingriff des Schaltfingers 13 in die Schaltnut 32 der Schaltstange 31-10 aufgezwungen, so dass die Schaltstange 31-10 schliesslich in ihre Gangstellung a-10 durch die Schaltwelle 12 betätigt wird.

Im Rahmen der Erfindung liegen weitere denkbare Ausführungsformen der Schaltvorrichtung mit einer Mehrzahl von Wählhülsen mit zugeordneten Hilfsgetrieben. So könnte die erste Ausführungsform in Zeile 1 der Figur 6 durch eine oder beide der zweiten Wählhülsen 15-III und 15-IV gemäss Spalte (W2) ergänzt werden, so dass auf diese Weise bereits drei weitere Ausführungsformen gebildet sind.

Bei den beschriebenen Ausführungsformen handelt es sich nur um beispielhafte Ausgestaltungen. Eine Kombination der beschriebenen Merkmale für unterschiedliche Ausführungsformen ist ebenfalls möglich. Weitere, insbesondere nicht beschriebene Merkmale der zur Erfindung gehörenden Vorrichtungsteile, sind den in den Zeichnungen dargestellten Geometrien der Vorrichtungsteile zu entnehmen.

## Patentansprüche

1. Schaltvorrichtung für ein Zahnräderwechselgetriebe, welches eine mit einer axialen Schaltkraft beaufschlagbare Schaltwelle (12) zur Betätigung von Zahnradkupplungen aufweist, gegenüber der eine Wählhülse (15-I) konzentrisch sowie zwangsgeführt verschieblich und gegenüber einem Gehäuse (11) festlegbar angeordnet ist,
wobei die Schaltwelle (12) in dem Gehäuse (11) drehbar und axial verschiebbar gelagert ist, aber mittels einer Rasteneinrichtung (21) gegenüber dem Gehäuse (11) in einer signifikanten Drehwinkelstellung
- axialverschieblich anordenbar aber
- mit einer überwindbaren Rastkraft im wesentlichen drehfest festlegbar ist,
**dadurch gekennzeichnet, dass** zumindest eine zusätzliche Wählhülse (15-II) gegenüber der Schaltwelle (12) konzentrisch sowie zwangsgeführt verschieblich und gegenüber dem Gehäuse (11) festlegbar angeordnet ist.

2. Schaltvorrichtung nach Patentanspruch 1,
**dadurch gekennzeichnet,**
**dass** die Schaltwelle (12)
- gegenüber dem Gehäuse (11) in signifikante Drehwinkelstellungen (12-8,12-9,12-10) betätigbar ist,
- in der jeweiligen signifikanten Drehwinkelstellung (12-8 bzw. 12-9 bzw. 12-10) aus einer Neutralstellung (N) heraus wahlweise in einer der beiden Achsenrichtungen ihrer Drehachse (24-24) in eine einem Gang zugeordnete Endstellung (a oder d) betätigbar ist und
- die Rasteneinrichtung (21) aufweist, durch welche die Schaltwelle (12) in ihren Drehwinkelstellungen (12-8, 12-9,12-10) gegenüber dem Gehäuse (11) verrastbar ist
wobei die Schaltvorrichtung die erste Wählhülse (15-I) aufweist,
- die zur Schaltwelle (12) konzentrisch sowie jeweils relativ drehbar und axial verschiebbar angeordnet ist und
- die im Gehäuse (11) drehbar und axial unverschiebbar gelagert ist,
wobei die Schaltvorrichtung ein erstes Hilfsgetriebe (16-I) zur Umwandlung einer hin- und hergehenden Bewegung in eine drehende Bewegung aufweist,
- durch welches die Schaltwelle (12) mit der ersten Wählhülse (15-I) verbunden ist,
- das eine Relativdrehung zwischen Schaltwelle (12) und erster Wählhülse (15-I) um einen dem Abstand zweier benachbarter signifikanter Drehwinkelstellungen (12-8 und 12-9 oder 12-8 und 12-10) der Schaltwelle (12) entsprechenden Differenzdrehwinkel (17) zwangsläufig festlegt, wenn die Schaltwelle (12) den Bereich ihrer Neutralstellung (N) in einer Achsenrichtung ihrer Drehachse (24-24) durchläuft und
- das eine zugehörige erste ein- und ausrückbaren Bremse (20-I) aufweist, durch welche die erste Wählhülse (15-I) in den signifikanten Drehwinkelstellungen (12-8,12-9,12-10) der Schaltwelle (12) gegenüber dem Gehäuse (11) festbremsbar ist,
wobei die Anordnung der Schaltvorrichtung so getroffen ist, dass eine Betätigung der Schaltwelle (12) aus einer Endstellung (a oder d) in die Neutralstellung (N) im eingerückten Zustand (20-1) der ersten Bremse (20-I) zwangsläufig zu einer Drehung der Schaltwelle (12) in dem einen Drehsinn, dagegen im ausgerückten Zustand (20-0) der ersten Bremse (20-I) zwangsläufig zu einer Drehung der ersten Wählhülse (15-I) in dem anderen Drehsinn jeweils um den Differenzdrehwinkel (17) gegenüber dem Gehäuse (11) führt,
wobei die zusätzliche Wählhülse (15-II;15-III;15-IV)
- zur Schaltwelle (12) konzentrisch sowie jeweils relativ drehbar und axial verschiebbar angeordnet ist und
- im Gehäuse (11) drehbar und axial unverschiebbar gelagert ist,
wobei ein jeweils der zusätzlichen Wählhülse (15-II oder 15-III oder 15-IV) zugeordnetes zusätzliches Hilfsgetriebe (16-II oder 22-III/23-III oder 22-IV/23-IV) zur Umwandlung einer hin- und hergehenden Bewegung in eine drehende Bewegung
- durch welches die Schaltwelle (12) mit der zugeordneten zusätzlichen Wählhülse (15-II oder 15-III oder 15-IV) verbunden ist,
- das eine Relativdrehung zwischen Schaltwelle (12) und der zugeordneten zusätzlichen Wählhülse (15-II oder 15-III oder 15-IV) um einen dem Abstand zweier Drehwinkelstellungen (12-8 und 12-9 sowie 12-8 und 12-10 oder 12-9 und 12-10) der Schaltwelle (12) entsprechenden Differenzdrehwinkel (17 oder [zwei × 17]) zwangsläufig festlegt, wenn die Schaltwelle (12) den Bereich ihrer Neutralstellung (N) in einer Achsenrichtung ihrer Drehachse (24-24) durchläuft, und
- das eine zugehörige zusätzliche ein- und ausrückbare Bremse (20-II;20-III;20-IV) aufweist, durch welche die dem zusätzlichen Hilfsgetriebe (16-II;22-III/23-III; 22-IV/23-IV) zugeordnete zusätzliche Wählhülse (15-II; 15-III;15-IV) in den signifikanten Drehwinkelstellungen (12-8,12-9,12-10) der Schaltwelle (12) gegenüber dem Gehäuse (11) festbremsbar ist,
wobei wenigstens eine zusätzliche Anordnung so getroffen ist, dass eine Betätigung der Schaltwelle (12) aus einer Endstellung (a oder d) in die Neutralstellung (N) im eingerückten Zustand (20-1) einer zusätzlichen Bremse (20-II;20-III;20-IV) zwangsläufig zu einer Drehung der Schaltwelle (12) in dem einen Drehsinn, dagegen im ausgerückten Zustand (20-0) der zusätzlichen Bremse (20-II;20-III;20-IV) zwangsläufig zu einer Drehung der zugeordneten zusätzlichen Wählhülse (15-II;15-III;15-IV) in dem anderen Drehsinn jeweils um den zugeordneten Differenzdrehwinkel (17 oder [zwei × 17]) gegenüber dem Gehäuse (11) führt, und
eine gegenseitige Abstimmung zwischen dem ersten Hilfsgetriebe (16-I) und jeweils einem zusätzlichen Hilfsgetriebe (16-II;22-III/23-III;22-IV/23-IV) derart getroffen ist, dass eine Betätigung der Schaltwelle (12) aus ein und derselben Endstellung (a oder d) in die Neutralstellung (N) im eingerückten Zustand (20-1) der ersten Bremse (20-I) zu einer Drehung der Schaltwelle (12) in dem einen Drehsinn - dagegen im eingerückten Zustand (20-1) der zusätzlichen Bremse (20-II;20-III;20-IV) zu einer Drehung der Schaltwelle (12) in demselben einen Drehsinn um einen dem Abstand zweier nicht benachbarter signifikanter Drehwinkelstellungen (12-9 u. 12-10) entsprechenden grösseren Differenzdrehwinkel (zwei×17) oder in dem anderen Drehsinn um einen dem Abstand zweier benachbarter oder nicht benachbarter signifikanter Drehwinkelstellungen entsprechenden Differenzdrehwinkel führt.

3. Schaltvorrichtung nach Patentanspruch 2,
**dadurch gekennzeichnet,**
**dass** durch ein einer zusätzlichen Wählhülse (15-II) zugeordnetes zusätzliches Hilfsgetriebe (16-II) mit einer zugehörigen zusätzlichen Bremse (20-II) ein Differenzdrehwinkel (17) festlegt ist, welcher zwei benachbarte signifikante Drehwinkelstellungen (12-8 und 12-9 oder 12-8 und 12-10) der Schaltwelle (12) einschliesst, und
**dass** die gegenseitige Abstimmung des ersten und des zusätzlichen Hilfsgetriebe (16-I und 16-II) so getroffen ist,
**dass** eine Betätigung der Schaltwelle (12) aus ein und derselben Endstellung (a oder d) in die Neutralstellung (N) im eingerückten Zustand (20-1) der ersten Bremse (20-I) zu einer Drehung der Schaltwelle (12) in dem einen Drehsinn - dagegen im eingerückten Zustand (20-1) der zusätzlichen Bremse (20-II) zu einer Drehung der Schaltwelle (12) in dem anderen Drehsinn führt.

4. Schaltvorrichtung nach Patentanspruch 2,
**dadurch gekennzeichnet,**
**dass** durch ein einer zusätzlichen Wählhülse (15-III) zugeodnetes zusätzliches Hilfsgetriebe (22-III/23-III) mit einer zugehörigen zusätzlichen Bremse (20-III) ein grösserer Differenzdrehwinkel festgelegt ist, welcher durch zwei nicht benachbarte signifikante Drehwinkelstellungen (12-9 und 12-10) der Schaltwelle (12) eingeschlossen ist, und dass die gegenseitige Abstimmung des ersten und des zusätzlichen Hilfsgetriebes (16-I und 22-III/23-III) so getroffen ist, dass eine Betätigung der Schaltwelle (12) aus ein und derselben Endstellung (a oder d) in die Neutralstellung (N) im eingerückten Zustand (20-1) der ersten Bremse (20-I) zu einer Drehung der Schaltwelle (12) in dem einen Drehsinn - dagegen im eingerückten Zustand der zusätzlichen Bremse (20-III) zu einer Drehung der Schaltwelle (12) in dem anderen Drehsinn führt.

5. Schaltvorrichtung nach Patentanspruch 4,
**dadurch gekennzeichnet,**
**dass** der durch das zusätzliche Hilfsgetriebe (22-III/23-III) festgegelegte grössere Differenzdrehwinkel gleich dem Zweifachen (zwei×17) eines durch zwei benachbarte signifikante Drehwinkelstellungen (12-8 und 12-9 oder 12-8 und 12-10) der Schaltwelle (12) eingeschlossenen Differenzdrehwinkels (17) ist.

6. Schaltvorrichtung nach Patentanspruch 2,
**dadurch gekennzeichnet,**
**dass** durch ein einer zusätzlichen Wählhülse (15-IV) zugeordnetes zusätzliches Hilfsgetriebe (22-IV/23-IV) mit einer zugehörigen zusätzlichen Bremse (20-IV) ein grösserer Differenzdrehwinkel festgelegt ist, welcher durch zwei nicht benachbarte signifikante Drehwinkelstellungen (12-9 und 12-10) der Schaltwelle (12) eingeschlossen ist, und dass die gegenseitige Abstimmung des ersten und des zusätzlichen Hilfsgetriebes (16-I und 22-IV/23-IV) so getroffen ist, dass eine Betätigung der Schaltwelle (12) aus ein und derselben Endstellung (a oder d) in die Neutralstellung (N) im eingerückten Zustand (20-1) der ersten Bremse (20-I) zu einer Drehung der Schaltwelle (12) in dem einen Drehsinn und im eingerückten Zustand der zusätzlichen Bremse (20-IV) zu einer Drehung der Schaltwelle (12) in demselben einen Drehsinn führt.

7. Schaltvorrichtung nach Patentanspruch 6,
**dadurch gekennzeichnet,**
**dass** der durch das zusätzliche Hilfsgetriebe (22-IV/23-IV) festgelegte grössere Differenzdrehwinkel gleich dem Zweifachen (zwei×17) eines durch zwei benachbarte signifikante Drehwinkelstellungen (12-8 und 12-9 oder 12-8 und 12-10) der Schaltwelle (12) eingeschlossenen Differenzdrehwinkels (17) ist.

## Claims

1. Shifting mechanism for a change-speed gearbox, which has a main shaft (12) to which an axial shifting force can be applied in order to operate gear couplings, relative to which a concentric and forcibly guided selector sleeve (15-I) is mounted so that it can be displaced and fixed relative to a housing (11),
which main shaft (12) is mounted in the housing (11) so as to be rotatable and axially slidable but can be fixed in a significant position of rotation angle relative to the housing (11) by means of a ratchet mechanism (21),
- being disposed so as to be axially slidable but
- essentially prevented from rotating by a ratchet force which can be overcome,
**characterised in that** at least one additional selector sleeve (15-II) concentric with the main shaft (12) is disposed so that it can be forcibly guided in a sliding motion and fixed relative to the housing (11).

2. Shifting mechanism as claimed in claim 1,
**characterised in that**
the main shaft (12)
- can be shifted into significant positions of rotation angle (12-8, 12-9, 12-10) relative to the housing (11),
- in the respective significant position of rotation angle (12-8 or 12-9 or 12-10), can be selectively shifted in one of the two axial directions of its rotation axis (24-24) from a neutral position (N) into an end position (a or d) associated with a gear speed and
- incorporates the ratchet mechanism (21), by means of which the main shaft (12) can be ratcheted in its rotation angle positions (12-8, 12-9, 12-10) and locked relative to the housing (11),
and the shifting mechanism incorporates the first selector sleeve (15-I),
- which is concentric with and respectively rotatable and axially slidable relative to the main shaft (12) and
- which is mounted in the housing (11) so as to be rotatable and axially immobile,
and the shifting mechanism has a first auxiliary gear (16-I) for converting a reciprocating motion into a rotary motion,
- by means of which the main shaft (12) is linked to the first selector sleeve (15-I),
- which forcibly fixes a relative rotation between main shaft (12) and first selector sleeve (15-I) about a differential angle of rotation (17) corresponding to the distance between two adjacent significant positions of rotation angle (12-8 and 12-9 or 12-8 and 12-10) of the main shaft (12) if the main shaft (12) passes through the region of its neutral position (N) in an axial direction of its rotation axis (24-24) and
- which has a co-operating first brake (20-I) which can be engaged and disengaged, by means of which the first selector sleeve (15-I) can be braked and blocked relative to the housing (11) in the significant positions of rotation angle (12-8, 12-9, 12-10) of the main shaft (12),
and the shifting mechanism is configured so that if the main shaft (12) is shifted from an end position (a or d) into the neutral position (N) when the first brake (20-I) is in the engaged state (20-1), the main shaft (12) is forced to rotate in one direction of rotation, whereas when the first brake (20-I) is the disengaged state (20-0), the first selector sleeve (15-I) is forced to rotate relative to the housing (11) in the other direction of rotation respectively by the differential angle of rotation (17),
and the additional selector sleeve (15-II; 15-111; 15-IV)
- is disposed concentrically with and so as to be respectively rotatable and axially slidable relative to the main shaft (12) and
- is mounted in the housing (11) so as to be rotatable and axially immobile,
and an additional auxiliary gear (16-II or 22-III/23-III or 22-IV/23-IV) co-operating respectively with the additional selector sleeve (15-II or 15-III or 15-IV) is provided for converting a reciprocating motion into a rotary motion,
- by means of which the main shaft (12) is connected to the co-operating additional selector sleeve (15-II or 15-III or 15-IV),
- which forcibly fixes a relative rotation between main shaft (12) and the co-operating additional selector sleeve (15-II or 15-III or 15-IV) about a differential angle of rotational (17 or [two x 17]) corresponding to the distance between two positions of rotation angle (12-8 and 12-9 as well as 12-8 and 12-10 or 12-9 and 12-10) of the main shaft (12) if the main shaft (12) passes through the region of its neutral position (N) in an axial direction of its rotation axis (24-24) and
- which has an additional co-operating brake (20-11; 20-III; 20-IV) which can be engaged and disengaged, by means of which the additional selector sleeve (15-II; 15-III; 15-IV) co-operating with the additional auxiliary gear (16-II; 22-III/23-III; 22-IV/23-IV) can be braked and blocked relative to the housing (11) in the significant positions of rotation angle (12-8, 12-9, 12-10) of the main shaft (12),
and at least one additional configuration is such that if the main shaft (12) is shifted from an end position (a or d) into the neutral position (N) when an additional brake (20-II; 20-III; 20-IV) is in the engaged state (20-1), the main shaft (12) is forced to rotate in one direction of rotation, whereas if the additional brake (20-II; 20-III; 20-IV) is in the disengaged state (20-0), the co-operating additional selector sleeve (15-11; 15-III; 15-IV) is forced to rotate relative to the housing (11) in the other direction of rotation respectively about the associated differential angle of rotation (17 or [two x 17]) and
a mutual selection made between the first auxiliary gear (16-I) and a respective additional auxiliary gear (16-II; 22-III/23-III; 22-IV/23-IV) is such that if the main shaft (12) is shifted from one and the same end position (a or d) into the neutral position (N) when the first brake (20-I) is in the engaged state (20-1), the main shaft (12) is forced to rotate in the one direction of rotation - whereas if the additional brake (20-II; 20-III; 20-IV) is in the engaged state (20-1), the main shaft (12) is forced to rotate in the same one direction by a differential rotation angle (two x 17) bigger than two non-adjacent significant positions of rotation angle (12-9 and 12-10) or in the other direction of rotation by about a differential rotation angle corresponding to the distance between two adjacent or non-adjacent significant positions of rotation angle.

3. Shifting mechanism as claimed in claim 2,
**characterised in that**
an additional auxiliary gear (16-III) co-operating with an additional selector sleeve (15-III) and having an additional co-operating brake (20-II) sets a differential angle of rotation (17) which subtends two adjacent significant positions of rotation angle (12-8 and 12-9 or 12-8 and 12-10) of the main shaft (12) and the mutual selection of the first and the additional auxiliary gear (16-I and 16-II) is such that if the main shaft (12) is shifted out of one and the same end position (a or d) into the neutral position (N) when the first brake (20-I) is in the engaged state (20-1), the main shaft (12) is forced to rotate in the one direction of rotation - whereas when the additional brake (20-II) is in the engaged state (20-1), the main shaft (12) is forced to rotate in the other direction of rotation.

4. Shifting mechanism as claimed in claim 2,
**characterised in that**
an additional auxiliary gear (22-III/23-III) co-operating with an additional selector sleeve (15-III) and having an additional co-operating brake (20-III) sets a bigger differential angle of rotation which subtends two non-adjacent significant positions of rotation angle (12-9 and 12-10) of the main shaft (12) and the mutual selection of the first and the additional auxiliary gear (16-I and 22-III/23-III) is such that if the main shaft (12) is shifted from one and the same end position (a or d) into the neutral position (N) when the first brake (20-I) is in the engaged state (20-1), the main shaft (12) is forced to rotate in the one direction of rotation - whereas when the additional brake (20-III) is in the engaged state the main shaft (12) is forced to rotate in the other direction of rotation.

5. Shifting mechanism as claimed in claim 4,
**characterised in that**
the bigger differential angle of rotation fixed by the additional auxiliary gear (22-III/23-III) is equal to two times (two x 17) a differential rotation angle (17) subtending two adjacent significant positions of rotation angle (12-8 and 12-9 or 12-8 and 12-10) of the main shaft (12).

6. Shifting mechanism as claimed in claim 2,
**characterised in that**
an additional auxiliary gear (22-IV/23-IV) co-operating with an additional selector sleeve (15-IV) and having an additional co-operating brake (20-IV) sets a bigger differential angle of rotation, which is subtended by two non-adjacent significant positions of rotation angle (12-9 and 12-10) of the main shaft (12) and the mutual selection of the first and the additional auxiliary gear (16-1 and 22-IV/23-IV) is such that if the main shaft (12) is shifted from one and the same end position (a or d) into the neutral position (N) when the first brake (20-1) is in the engaged state (20-1), the main shaft (12) is forced to rotate in the one direction of rotation and when the additional brake (20-IV) is in the engaged state, the main shaft (12) is forced to rotate in the same one direction of rotation.

7. Shifting mechanism as claimed in claim 6,
**characterised in that**
the bigger differential angle of rotation fixed by the additional auxiliary gear (22-IV/23-IV) is equal to two times (two x 17) a differential angle of rotation (17) subtended by two adjacent significant positions of rotation angle (12-8 and 12-9 or 12-8 and 12-10) of the main shaft (12).

## Revendications

1. Dispositif de commutation pour une boîte de vitesses à engrenages, qui comprend un arbre de commutation (12) susceptible d'être sollicité par une force axiale de commutation et destiné à actionner des accouplements à engrenages, arbre par rapport auquel une douille de sélection (15-I) est mobile concentriquement en étant guidée à force et agencée avec faculté d'immobilisation par rapport à un boîtier (11),
dans lequel l'arbre de commutation (12) est monté de façon mobile en rotation et en translation axiale dans le boîtier (11),
- mais il est susceptible d'être agencé avec mobilité axiale,
- et il est susceptible d'être immobilisé sensiblement solidairement en rotation avec une force d'enclenchement surmontable dans une position d'angle de rotation significative par rapport au boîtier (11) au moyen d'un dispositif d'enclenchement (21),
**caractérisé en ce que**
au moins une douille de sélection supplémentaire (15-II) est mobile concentriquement en étant guidée à force par rapport à l'arbre de commutation (12) et agencée avec faculté d'immobilisation par rapport au boîtier (11).

2. Dispositif de commutation selon la revendication 1, **caractérisé en ce que** l'arbre de commutation (12)
- est susceptible d'être actionné dans des positions d'angle de rotation significatives (12-8, 12-9, 12-10) par rapport au boîtier (11),
- est susceptible d'être actionné dans la position d'angle de rotation significative respective (12-8, 12-9, 12-10) en partant d'une position neutre (N) au choix dans l'une des deux directions de son axe de rotation (24-24) jusque dans une position finale (a ou d) associée à un rapport de vitesse, et
- comprend le dispositif d'enclenchement (21) par lequel l'arbre de commutation (12) est susceptible d'être enclenché dans ses positions d'angle de rotation (12-8, 12-9, 12-10) par rapport au boîtier (11),
le dispositif de commutation comprenant la première douille de sélection (15-I) qui
- est agencée concentriquement à l'arbre de commutation (12) et mobile en rotation et en translation axiale, et qui
- est montée mobile en rotation et axialement immobile dans le boîtier (11),
le dispositif de commutation comprenant un premier mécanisme de transmission auxiliaire (16-I) pour convertir un mouvement en va-et-vient en un mouvement de rotation,
- par lequel l'arbre de commutation (12) est relié à la première douille de sélection (15-I),
- qui détermine à force une rotation relative entre l'arbre de commutation (12) et la première douille de sélection (15-I) d'un angle de rotation différentiel (17) correspondant à la distance entre deux positions d'angle de rotation significatives voisines (12-8 et 12-9 ou 12-8 et 12-10) de l'arbre de commutation (12), lorsque l'arbre de commutation (12) traverse la zone de sa position neutre (N) dans une direction de son axe de rotation (24-24), et
- qui comprend un premier frein associé (20-I) susceptible d'être engagé et dégagé, par lequel la première douille de sélection (15-I) est susceptible d'être immobilisée par freinage dans les positions d'angle de rotation significatives (12-8, 12-9, 12-10) de l'arbre de commutation (12) par rapport au boîtier (11),
l'agencement du dispositif de commutation étant choisi tel qu'un actionnement de l'arbre de commutation (12) en partant d'une position finale (a ou d) jusque dans la position neutre (N) dans l'état engagé (20-1) du premier frein (20-I) mène forcément à une rotation de l'arbre de commutation (12) dans l'un des sens de rotation, mais dans l'état dégagé (20-0) du premier frein (20-I) il mène forcément à une rotation de la première douille de sélection (15-I) dans l'autre sens de rotation, chaque fois de l'angle de rotation différentiel (17) par rapport au boîtier (11),
la douille de sélection supplémentaire (15-II ; 15-III ; 15-IV)
- étant agencée concentriquement à l'arbre de commutation (12) et mobile en rotation et en translation axiale, et
- étant montée mobile en rotation et axialement immobile dans le boîtier (11),
dans lequel un mécanisme de transmission auxiliaire supplémentaire (16-II ou 22-III/23-III ou 22-IV/23-IV) associé à la douille de sélection supplémentaire (15-II ou 15-III ou 15-IV) et destiné à convertir un mouvement en va-et-vient en un mouvement de rotation,
- par lequel l'arbre de commutation (12) est relié à la douille de sélection supplémentaire associée (15-II ou 15-III ou 15-IV),
- qui détermine à force une rotation relative entre l'arbre de commutation (12) et la douille de sélection supplémentaire associée (15-II ou 15-III ou 15-IV) d'un angle de rotation différentiel (17 ou deux fois 17) correspondant à la distance entre deux positions d'angle de rotation (12-8 et 12-9 ainsi que 12-8 et 12-10 ou 12-9 et 12-10) de l'arbre de commutation (12), lorsque l'arbre de commutation (12) traverse la zone de sa position neutre (N) dans une direction de son axe de rotation (24-24) et
- qui comprend un frein supplémentaire associé (20-II ; 20-III ; 20-IV) susceptible d'être engagé et dégagé, par lequel la douille de sélection supplémentaire (15-II ; 15-III ; 15-IV) associée au mécanisme de transmission auxiliaire supplémentaire (16-II ; 22-III/23-III ; 22-IV/23-IV) est susceptible d'être immobilisée par freinage dans les positions d'angle de rotation significatives (12-8, 12-9, 12-10) de l'arbre de commutation (12) par rapport au boîtier (11),
au moins un agencement supplémentaire étant choisi tel qu'un actionnement de l'arbre de commutation (12) en partant d'une position finale (a ou d) jusque dans la position neutre (N) dans l'état engagé (20-1) d'un frein supplémentaire (20-II ; 20-III ; 20-IV) mène forcément à une rotation de l'arbre de commutation (12) dans l'un des sens de rotation, mais dans l'état dégagé (20-0) du frein supplémentaire (20-II ; 20-III ; 20-IV) il mène forcément à une rotation de la douille de sélection supplémentaire associée (15-II ; 15-III ; 15-IV) dans l'autre sens de rotation, chaque fois de l'angle de rotation différentiel associé (17 ou deux fois 17) par rapport au boîtier (11), et
un accord mutuel entre le premier mécanisme de transmission auxiliaire (16-I) et un mécanisme de transmission auxiliaire supplémentaire respectif (16-II ; 22-III/23-III ; 22-IV/23-IV) est choisi tel qu'un actionnement de l'arbre de commutation (12) en partant d'une seule et même position finale (a ou d) jusque dans la position neutre (N) dans l'état engagé (20-1) du premier frein (20-I) mène forcément à une rotation de l'arbre de commutation (12) dans l'un des sens de rotation, mais dans l'état engagé (20-1) du frein supplémentaire (20-II ; 20-III ; 20-IV) il mène à une rotation de l'arbre de commutation (12) dans le même sens de rotation d'un angle de rotation différentiel (deux fois 17) supérieur correspondant à la distance entre deux positions d'angle de rotation significatives non voisines (12-9 et 12-10) ou dans l'autre sens de rotation d'un angle de rotation différentiel correspondant à la distance de deux positions d'angle de rotation significatives voisines ou non voisines.

3. Dispositif de commutation selon la revendication 2, **caractérisé en ce que** par un mécanisme de transmission supplémentaire (16-II) associé à une douille de sélection supplémentaire (15-II) et comportant un frein supplémentaire associé (20-II), un angle de rotation différentiel (17) est déterminé qui inclut deux positions d'angle de rotation significatives voisines (12-8 et 12-9 ou 12-8 et 12-10) de l'arbre de commutation (12), et **en ce que** l'accord mutuel du premier mécanisme de transmission auxiliaire et du mécanisme de transmission auxiliaire supplémentaire (16-I et 16-II) est choisi de telle sorte qu'un actionnement de l'arbre de commutation (12) en partant d'une seule et même position finale (a ou d) jusque dans la position neutre (N) dans l'état engagé (20-1) du premier frein (20-I) mène forcément à une rotation de l'arbre de commutation (12) dans l'un des sens de rotation, mais dans l'état engagé (20-1) du frein supplémentaire (20-II) il mène à une rotation de l'arbre de commutation (12) dans l'autre sens de rotation.

4. Dispositif de commutation selon la revendication 2, **caractérisé en ce que** par un mécanisme de transmission auxiliaire supplémentaire (22-III/23-III) associé à une douille de sélection supplémentaire (15-III) et comportant un frein supplémentaire associé (20-III), un angle de rotation différentiel plus grand est déterminé qui est formé par deux positions d'angle de rotation significatives non voisines (12-9 et 12-10) de l'arbre de commutation (12), et **en ce que** l'accord mutuel du premier mécanisme de transmission auxiliaire et du mécanisme de transmission auxiliaire supplémentaire (16-I et 22-III/23-III) est choisi de telle sorte qu'un actionnement de l'arbre de commutation (12) en partant d'une seule et même position finale (a ou d) jusque dans la position neutre (N) dans l'état engagé (20-1) du premier frein (20-I) mène à une rotation de l'arbre de commutation (12) dans l'un des sens de rotation, mais dans l'état engagé du frein supplémentaire (20-III) il mène à une rotation de l'arbre de commutation (12) dans l'autre sens de rotation.

5. Dispositif de commutation selon la revendication 4, **caractérisé en ce que** l'angle de rotation différentiel plus grand déterminé par le mécanisme de transmission auxiliaire supplémentaire (22-III/23-III) est égal à deux fois (deux fois 17) un angle de rotation différentiel (17) formé par deux positions d'angle de rotation significatives voisines (12-8 et 12-9 ou 12-8 et 12-10) de l'arbre de commutation (12).

6. Dispositif de commutation selon la revendication 2, **caractérisé en ce que** par un mécanisme de transmission auxiliaire supplémentaire (22-IV/23-IV) associé à une douille de sélection supplémentaire (15-IV) et comportant un frein supplémentaire associé (20-IV), un angle de rotation différentiel plus grand est déterminé qui est formé par deux positions d'angle de rotation significatives non voisines (12-9 et 12-10) de l'arbre de commutation (12), et **en ce que** l'accord mutuel du premier mécanisme de transmission auxiliaire et du mécanisme de transmission auxiliaire supplémentaire (16-I et 22-IV/23-IV) est choisi de telle sorte qu'un actionnement de l'arbre de commutation (12) en partant d'une seule et même position finale (a ou d) jusque dans la position neutre (N) dans l'état engagé (20-1) du premier frein (20-I) mène à une rotation de l'arbre de commutation (12) dans l'un des sens de rotation, et dans l'état engagé du frein supplémentaire (20-IV) il mène à une rotation de l'arbre de commutation (12) dans le même sens de rotation.

7. Dispositif de commutation selon la revendication 6, **caractérisé en ce que** l'angle de rotation différentiel plus grand déterminé par le mécanisme de transmission auxiliaire supplémentaire (22-IV/23-IV) est égal au double (deux fois 17) d'un angle de rotation différentiel (17) formé par deux positions d'angle de rotation significatives voisines (12-8 et 12-9 ou 12-8 et 12-10) de l'arbre de commutation (12).
